# EUROPÄISCHE PATENTSCHRIFT

(11) **EP 0 738 696 B1**
(45) Veröffentlichungstag und Bekanntmachung des Hinweises auf die Patenterteilung: **11.11.1998**
(21) Anmeldenummer: 96106092.8
(22) Anmeldetag: 18.04.1996
(51) Int. Cl.: C04B 24/42, C04B 28/14

(54) **Verfahren zur wasserabweisenden Imprägnierung von Gips**
Process for water-repellent impregnation of gypsum
Procédé pour l'imprégnation hydrofuge de plâtre

(30) Priorität: 20.04.1995 DE 19514639
(43) Veröffentlichungstag der Anmeldung: 23.10.1996
(73) Patentinhaber: WACKER-CHEMIE GMBH, D-81737 München (DE)
(72) Erfinder: Gerhardinger, Dieter, 84489 Burghausen (DE); Weidner, Richard, Dr., 84489 Burghausen (DE); Mayer, Hans, Dr., 84489 Burghausen (DE)
(74) Vertreter: Fritz, Helmut, Dr.

(56) Entgegenhaltungen:
- EP-A- 0 242 798
- DE-A- 3 312 911
- FR-A- 1 337 188
- FR-A- 2 308 602
- FR-A- 2 496 090
- GB-A- 2 059 413
- US-A- 3 455 710

## Beschreibung

Die Erfindung betrifft wasserabweisende Gipszusammensetzungen, die Oxid und/oder Hydroxid von Alkali- und/oder Erdalkalimetallen und Organopolysiloxan, welches an Siliciumatome gebundene Hydroxyl- und/oder Alkoxygruppen aufweist, enthalten und ein Verfahren zur wasserabweisenden Ausrüstung von Gips.

Es ist aus US-A-3,455,710 bekannt, daß Gips durch Imprägnieren mit Si-gebundene Wasserstoffatome enthaltenden Organosiloxanen (H-Siloxane) wasserabweisende Eigenschaften verliehen werden können. Dort ist auch die Imprägnierung von Mischungen aus Gips und Calciumhydroxid mit H-Siloxanen beschrieben. Die wasserabweisende Wirkung der H-Siloxane ist jedoch unbefriedigend. Ferner sind die H-Siloxane recht teuer und entwickeln in Kontakt mit Wasser Wasserstoff.

In der US-A-4,411,702 sind wasserabweisende Formkörper beschrieben, die aus den Bestandteilen Gipsdihydrat, Schlacke und Calciumhydroxid hergestellt werden und bei deren Herstellung ein Teil der Bestandteile mit einer Polydimethylsiloxanflüssigkeit behandelt wird. Die wasserabweisende Wirkung der Polydimethylsiloxanflüssigkeit ist jedoch unbefriedigend.

Weitere Gipszusammensetzungen mit wasserabweisender Wirkung sind in den Druckschriften GB-A-2059413, FR-A-2496090 und EP-A-242798 beschrieben.

Der vorliegenden Erfindung liegt die Aufgabe zugrunde, kostengünstige und einfach verarbeitbare wasserabweisende Gipszusammensetzungen und daraus herstellbare Formkörper bereitzustellen.

Die Erfindung betrifft wasserabweisende Gipszusammensetzungen, enthaltend die Bestandteile
(A) 100 Gewichtsteile Gips,
(B) 0,05 bis 50 Gewichtsteile Oxid und/oder Hydroxid von Alkali- und/oder Erdalkalimetallen,
(C) 0,05 bis 20 Gewichtsteile Organopolysiloxan, welches an Siliciumatome gebundene Hydroxyl-und/oder Alkoxygruppen aufweist, bei 25°C flüssig ist und eine Viskosität von 0,5 bis 3000 mPa·s besitzt.

Die wasserabweisenden Gipszusammensetzungen, können jede Gipsart enthalten. Unter den Gipsarten sind Plaster (CaSO₄·H₂O) in Form von beispielsweise Baugips, Stuckgips oder Isoliergips und Naturgips (CaSO₄·1/2 H₂O) bevorzugt. Auch andere Gipsarten, wie Estrichgips, Marmorgips und Anhydrit können eingesetzt werden. Gut geeignet ist auch das bei der Rauchgasentschwefelung anfallende Calciumsulfat.

Als Oxid und/oder Hydroxid von Alkali- und/oder Erdalkalimetallen (B) sind CaO, MgO, Ca(OH)₂, Mg(OH)₂ und NaOH bevorzugt, insbesondere Ca(OH)₂, CaO und NaOH.

Vorzugsweise werden, bezogen auf 100 Gewichtsteile Gips (A), 0,1 bis 35 Gewichtsteile, insbesondere 0,5 bis 25 Gewichtsteile, Oxid und/oder Hydroxid (B) eingesetzt.

Das Organopolysiloxan (C) ist vorzugsweise aufgebaut aus Einheiten der allgemeinen Formel (I)

Rₐ(OR')_{b}SiO_{(4-a-b)/2} (I),

in der
- R: gleiche oder verschiedene, gegebenenfalls mit Halogenatomen substituierte C₁- bis C₁₈-Kohlenwasserstoffreste,
- **R'**: gleiche oder verschiedene C₁- bis C₄-Alkylreste oder Wasserstoffatome,
- **a**: die Werte 0, 1, 2 oder 3, durchschnittlich einen Wert von 0,1 bis 2,5 und
- **b**: die Werte 0, 1, 2, 3 oder 4, durchschnittlich einen Wert von 0,1 bis 3,5 bedeuten.

Beispiele für nicht substituierte Reste **R** sind Alkylreste, wie der Methyl-, Ethyl-, n- Propyl-, iso-Propyl-, n-Butyl-, iso-Butyl-, sec.-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest;

Beispiele für mit Halogenatomen substituierte Reste **R** sind mit Fluor und Chlor substituiert, wie der 3,3,3-Trifluor-n-propylrest, der 2,2,2,2',2',2'-Hexafluorisopropyl-rest, der Heptafluorisopropylrest, und Halogenarylreste, wie der o-, m-, und p-Chlorphenylrest;

Als Reste **R** sind unsubstituierte Kohlenwasserstoffreste bevorzugt, insbesondere solche mit 1 bis 8 Kohlenstoffatomen, speziell Methyl-, Ethyl-, Propyl-, n-Octyl-, iso-Octyl-, Vinyl-, Tolyl- und Phenylreste.

Beispiele für Reste R' sind Wasserstoffatome, Methyl-, Ethyl-, n-Propyl-, iso-Propyl-, n-Butyl-, sec.-Butyl-, iso-Butyl- und tert.-Butylreste, insbesondere Methyl- und Ethylreste.

Der Index a hat vorzugsweise einen durchschnittlichen Wert von 0,3 bis 2,0 insbesondere von 0,5 bis 1,8.

Der Index b hat vorzugsweise einen durchschnittlichen Wert von 0,2 bis 1,5, insbesondere von 0,3 bis 1,3.

Das Organopolysiloxan (C) ist vorzugsweise verzweigt bis harzartig vernetzt. Die Summe von a+b besitzt deshalb vorzugsweise einen Wert von 1,5 bis 1,9.

Das Organopolysiloxan (C) ist bei 25°C flüssig und weist eine Viskosität von 0,5 bis 3000 mPa·s, insbesondere 1 bis 500 mPa·s, speziell 2 bis 200 mPa·s bei 25°C auf.

Das Organopolysiloxan (C) weist insbesondere die allgemeine Formel (II)

[(RSiO_{3/2})_{c}(R₂SiO)_{d}(RSiO(OR'))ₑ(R₂SiO_{1/2}(OR'))_{f} (RSiO(OH))_{g}(R₂SiO_{1/2}(OH))ₕ]ᵢ (II),

auf, in der
- c: einen Wert von 0,5 bis 0,9,
- d: einen Wert von 0 bis 0,3,
die Summe von e+f+g+h einen Wert von 0,1 bis 0,4,
- i: einen Wert von 2 bis 100 insbesondere 3 bis 40 besitzen und
- R und R': die vorstehenden Bedeutungen aufweisen.

Besonders bevorzugt als Organopolysiloxane (C) sind solche, die durch Umsetzung von Methyltrichlorsilan oder Phenyltrichlorsilan mit Methanol oder Ethanol in Wasser erhältlich sind, z.B. solche der Summenformel

CH₃Si(OC₂H₅)_{O,8}O_{1,1} oder C₆H₅Si(OC₂H₅)_{0,72}O_{1,14} .

Herstellungsbedingt können die Organopolysiloxane (C) Organosilane, wie Methyltrimethoxysilan und Methyltriethoxysilan enthalten, vorzugsweise jedoch nicht mehr als 30 Gew.%, insbesondere nicht mehr als 10 Gew%.

Vorzugsweise werden, bezogen auf 100 Gewichtsteile Gips (A), 0,1 bis 8, insbesondere 0,3 bis 5 Gewichtsteile Organopolysiloxane (C) eingesetzt.

Die wasserabweisenden Gipszusammensetzungen, können noch weitere Organopolysiloxane enthalten, welche keine an Siliciumatome gebundenen Hydroxyl- und/oder Alkoxygruppen aufweist. Vorzugsweise beträgt die Menge an weiteren Organopolysiloxanen höchstens 30 Gewichtsteile, insbesondere höchstens 10 Gewichtsteile bezogen auf 100 Gewichtsteile Organopolysiloxane (C).

Die wasserabweisenden Gipszusammensetzungen, können noch Zusätze (D) enthalten, die die Herstellung von Gipsformkörpern erleichtern oder die Eigenschaften der Gipsformkörper verbessern. Zusätze sind beispielsweise Füllstoffe, wie Siliciumdioxid, Perlite und Cellulosefasern und Verstärkungsmaterialien, wie Glasfasern und Glasvliese, Beschleuniger, wie Kaliumsulfat und Aluminiumsulfat, Verzögerer, wie Eiweiße oder Weinsäuresalze, Luftporenbildner, wie Organosulfonate oder Organosulfate, Plastifizierungsmittel für den Gipsbrei, wie Ligninsulfonate und Haftvermittler für Karton, wie Stärke und Pülpe.

Vorzugsweise werden, bezogen auf 100 Gewichtsteile Gips (A), höchstens 25, insbesondere höchstens 15 Gewichtsteile Zusätze (D) eingesetzt.

Die Erfindung betrifft auch ein Verfahren zur wasserabweisenden Ausrüstung von Gips, bei dem
(A) 100 Gewichtsteile Gips mit
(B) 0,05 bis 50 Gewichtsteilen Oxid und/oder Hydroxid von Alkali- und/oder Erdalkalimetallen und,
(C) 0,05 bis 20 Gewichtsteilen Organopolysiloxan, welches an Siliciumatome gebundene Hydroxyl- und/oder Alkoxygruppen aufweist, bei 25°C flüssig ist und eine Viskosität von 0,5 bis 3000 mPa·s besitzt, versetzt werden.

Oxid und/oder Hydroxid (B), Organopolysiloxan (C) und gegebenenfalls Zusätze (D) werden dem Gips vor dem Formen von Formkörpern zugegeben. Dabei können die Komponenten in beliebiger Reihenfolge vermischt werden.

Oxid und/oder Hydroxid (B) und Organopolysiloxan (C) können jeweils als Pulver oder als wäßrige Lösung, Suspension oder Emulsion zugegeben werden. Oxid und/oder Hydroxid (B) und Organopolysiloxan (C) können mit dem trockenen Gips oder mit dem Brei aus Wasser und Gips vermischt werden. Oxid und/oder Hydroxid (B) können auch mit Organopolysiloxan (C) vermischt werden und anschließend dem Gips (A) zugegeben werden. Oxid und/oder Hydroxid (B) können auch mit dem Gips (A) vermischt werden und anschließend mit Organopolysiloxan (C) versetzt werden.

Wenn Organopolysiloxan (C) als Emulsion eingesetzt wird werden an sich bekannte Emulgatoren verwendet.

Als anionische Emulgatoren eignen sich besonders:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.
   Als nichtionische Emulgatoren eignen sich besonders:
5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 8 bis 40 EO-Einheiten und Alkylresten von 8 bis 20 C-Atomen.
7. Alkylarylpolyglycolether, vorzugsweise solche mit 8 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Fettsäuren mit 6 bis 24 C-Atomen.
10. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.
11. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
   Als kationische Emulgatoren eignen sich besonders:
12. Salze von primären, sekundären und tertiären Fettaminen mit 8 bis 24 C-Atomen mit Essigsäure, Schwefelsäure, Salzsäure und Phosphorsäuren.
13. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.
14. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
   Als Ampholytische Emulgatoren eignen sich besonders:
15. Langkettig substituierte Aminosäuren, wie N-Alkyl-di(aminoethyl-)glycin oder N-Alkyl-2-aminopropionsäuresalze.
16. Betaine, wie N-(3-Acylamidopropyl)-N,N-dimethylammoniumsalze mit einem C₈-C₁₈-Acylrest und Alkyl-imidazolium-Betaine.

Bevorzugt als Emulgatoren sind nichtionische Emulgatoren, insbesondere der vorstehend unter 5. aufgeführte Polyvinylalkohol. Besonders bevorzugte Polyvinylalkohole enthalten noch 5 bis 20 %, insbesondere 10 bis 15 % Vinylacetateinheiten und weisen vorzugsweise einen Polymerisationsgrad von 500 bis 3000, insbesondere von 1200 bis 2000 auf. Die wäßrigen Emulsionen von Organopolysiloxan (C) enthalten vorzugsweise 30 bis 95 Gew.-%, insbesondere 35 bis 70 Gew.-%, speziell 45 bis 60 Gew.-% Wasser. Der Anteil des Emulgators kann 0,1 bis 15 Gew.-% von Organopolysiloxan (C) betragen. Vorzugsweise liegt er bei 2 bis 10 Gew.-%.

In einer bevorzugten Ausführungsform wird aus Wasser, dem vorstehenden Emulgator und Organopolysiloxan (C) ein Schaum erzeugt und dieser Schaum zu dem Brei aus Wasser, Gips (A), Oxid und/oder Hydroxid (B) und gegebenenfalls Zusätzen (D) gegeben. Mit dem erhaltenen Gemisch können poröse Gipsformkörper hergestellt werden.

Es kann, falls gewünscht, das Organopolysiloxan in Wasser, welches auch Pülpe enthalten kann, verteilt werden und anschließend mit dem Gips (A) und Oxid und/oder Hydroxid (B) oder einem wäßrigen Brei aus (A) und (B) vermischt werden, der, falls erforderlich, auch (D) enthalten kann.

In einer weiteren bevorzugten Ausführungsform wird Wasser und Organopolysiloxan (C) in einem langen Rohr mit turbulenter Strömung gegebenenfalls mit Zusätzen (D) vermischt und anschließend zu dem Gips (A) und Oxid und/oder Hydroxid (B) gegeben.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 25°C.

### Beispiele

### Herstellung der Probekörper

Aus X Gewichtsteilen Naturgips (CaSO₄·1/2 H₂O), 80 Gewichtsteilen Wasser, Y Gewichtsteilen Calciumhydroxidpulver und Z Gewichtsteilen gegebenenfalls in Tabelle I angegebenen weiteren Komponenten wurde ein Gipsbrei hergestellt und in kreisförmige Formen zu Probekörpern mit einem Durchmesser von 85 mm und 6 mm Höhe gegossen. Nach 60 Minuten wurden die erstarrten Probekörper entschalt und 24 Stunden bei 40°C in einem Umlufttrockenschrank getrocknet.

### Wasseraufnahme analog DIN 18180

Die Probekörper wurden in horizontaler Lage in Wasser von 23°C so eingetaucht, daß 50 mm Wassersäule über der Probenoberfläche stand. Nach zweistündiger Wasserlagerung wurden die Probekörper aus dem Wasser genommen, das oberflächlich anhaftende Wasser wurde entfernt und die Massenzunahme durch Verwiegen bestimmt. Die Wasseraufnahme als Massenanteil in % ist in Tabelle I angegeben.

### Organopolysiloxan (C)

Eingesetzt wurde ein flüssiges Organopolysiloxan der Summenformel

CH₃Si(OC₂H₅)_{O,8}O_{1,1}

mit einer Viskosität von 21 mPa·s bei 25°C.

### Zusammensetzung der Organopolysiloxanemulsion

Aus 240 Gewichtsteilen des vorstehenden Organopolysiloxans, 120 Gewichtsteilen einer 10 Gew.-%igen wäßrigen Lösung von Polyvinylalkohol, der noch 12 % Vinylacetateinheiten und einen Polymerisationsgrad von 1600 aufwies und 120 Gewichtsteilen entsalztem Wasser wurde eine Emulsion hergestellt.

**Tabelle I**

| **Beispiele 1 bis 9 (Beispiele 1 und 6 nicht erfindungsgemäß)** | | | | | |
|---|---|---|---|---|---|
| Beisp. | X | Y | Z | hydrophobierende Komponente | Wasseraufnahme Gew.% nach DIN 18180 |
| 1 | 98 | 2 | - | | 43,4 % |
| 2 | 98 | 2 | 0,5 | Organopolysiloxan | 9,7 % |
| 3 | 98 | 2 | 2,0 | | 3,6 % |
| 4 | 96 | 4 | 0,5 | | 7,7 % |
| 5 | 96 | 4 | 1,0 | Organopolysiloxanemulsion | 3,5 % |
| 6 | 92 | 8 | - | | 41,0 % |
| 7 | 92 | 8 | 0,5 | Organopolysiloxan | 2,9 % |
| 8 | 92 | 8 | 2,0 | | 1,6 % |
| 9 | 92 | 8 | 1,0 | Organopolysiloxanemulsion | 1,5 % |

### Beispiel 10

4 Gewichtsteile einer Mischung aus 100 Gewichtsteilen des vorstehenden Organopolysiloxans und 40 Gewichtsteilen Calciumhydroxid wurde zu einer Mischung aus 100 Gewichtsteilen Naturgips und 80 Gewichtsteilen Wasser gegeben. Daraus wurden wie vorstehend Probekörper gegossen und getrocknet. Die Wasseraufnahme analog DIN 18180 betrug 3,1%.

### Beispiel 11

Aus einer Mischung aus 99 Gewichtsteilen Naturgips, 1 Gewichtsteil Natriumhydroxid, 80 Gewichtsteilen Wasser und 1 Gewichtsteil der vorstehenden Organopolysiloxanemulsion wurden wie vorstehend Probekörper gegossen und getrocknet. Die Wasseraufnahme analog DIN 18180 betrug 3,6%.

### Beispiel 12

Aus einer Mischung aus 98 Gewichtsteilen Naturgips, 2 Gewichtsteilen Calciumoxid, 80 Gewichtsteilen Wasser und 3 Gewichtsteilen der vorstehenden Organopolysiloxanemulsion wurden wie vorstehend Probekörper gegossen und getrocknet. Die Wasseraufnahme analog DIN 18180 betrug 3,4%.

### Beispiel 13 (nicht erfindungsgemäß)

Aus einer Mischung aus 90 Gewichtsteilen Naturgips, 10 Gewichtsteilen Calciumhydroxid, 80 Gewichtsteilen Wasser und 2 Gewichtsteilen eines linearen Polydimethylsiloxanöls mit einer Viskosität von 950 mPa·s wurden wie vorstehend Probekörper gegossen und getrocknet. Die Wasseraufnahme analog DIN 18180 betrug 47,9%.

### Beispiel 14 (nicht erfindungsgemäß)

Beispiel 13 wurde wiederholt, mit der Änderung, daß nur 0,5 Gewichtsteile des linearen Polydimethylsiloxanöls eingesetzt wurden. Die Wasseraufnahme analog DIN 18180 betrug 47,9%.

### Beispiel 15

30 Gewichtsteile Wasser, 0,1 Gewichtsteile Ethersulfat (Zeliquid^{R} LP 2 von Hoechst AG, Deutschland) und 2 Gewichtsteile des vorstehenden Organopolysiloxans wurden in einem Schaumerzeuger bei 1200 Umdrehungen/Minute vermischt. Der erhaltene Schaum wurde mit einem Gipsbrei, bestehend aus 90 Gewichtsteilen Naturgips, 10 Gewichtsteilen Calciumhydroxid und 50 Gewichtsteilen Wasser vermischt. Anschließend wurden wie vorstehend Probekörper gegossen und getrocknet. Die Wasseraufnahme analog DIN 18180 betrug 2,9%.

## Patentansprüche

1. Wasserabweisende Gipszusammensetzungen, enthaltend die Bestandteile
(A) 100 Gewichtsteile Gips,
(B) 0,05 bis 50 Gewichtsteile Oxid und/oder Hydroxid von Alkali- und/oder Erdalkalimetallen,
(C) 0,05 bis 20 Gewichtsteile Organopolysiloxan, welches an Siliciumatome gebundene Hydroxyl- und/oder Alkoxygruppen aufweist, bei 25°C flüssig ist und eine Viskosität von 0,5 bis 3000 mPa.s besitzt.

2. Wasserabweisende Gipszusammensetzungen nach Anspruch 1, wobei als Oxid und/oder Hydroxid von Alkali- und/oder Erdalkalimetallen (B) CaO, MgO, Ca(OH)₂, Mg(OH)₂ und NaOH eingesetzt werden.

3. Wasserabweisende Gipszusammensetzungen nach Anspruch 1 oder 2, wobei, bezogen auf 100 Gewichtsteile Gips (A), 0,1 bis 35, Gewichtsteile Oxid und/oder Hydroxid (B) eingesetzt werden.

4. Wasserabweisende Gipszusammensetzungen nach Anspruch 1 bis 3, wobei das Organopolysiloxan (C) aus Einheiten der allgemeinen Formel (I)
Rₐ(OR')_{b}SiO_{(4-a-b)/2} (I),
aufgebaut ist, in der
**R** gleiche oder verschiedene, gegebenenfalls mit Halogenatomen substituierte C₁- bis C₁₈-Kohlenwasserstoffreste,
**R'** gleiche oder verschiedene C₁- bis C₄-Alkylreste oder Wasserstoffatome,
**a** die Werte 0, 1, 2 oder 3, durchschnittlich einen Wert von 0,1 bis 2,5 und
**b** die Werte 0, 1, 2, 3 oder 4, durchschnittlich einen Wert von 0,1 bis 3,5 bedeuten.

5. Wasserabweisende Gipszusammensetzungen nach Anspruch 1 bis 4, wobei, bezogen auf 100 Gewichtsteile Gips (A), 0,1 bis 8 Gewichtsteile Organopolysiloxane (C) eingesetzt werden.

6. Verfahren zur wasserabweisenden Ausrüstung von Gips, bei dem
(A) 100 Gewichtsteile Gips mit
(B) 0,05 bis 50 Gewichtsteilen Oxid und/oder Hydroxid von Alkali- und/oder Erdalkalimetallen und,
(C) 0,05 bis 20 Gewichtsteilen Organopolysiloxan, welches an Siliciumatome gebundene Hydroxyl-und/oder Alkoxygruppen aufweist, bei 25°C flüssig ist und eine Viskosität von 0,5 bis 3000 mPa.s besitzt, versetzt werden.

7. Verfahren nach Anspruch 6, bei dem Organopolysiloxan (C) als Emulsion eingesetzt wird.

## Claims

1. Water-repellent plaster compositions comprising the constituents
(A) 100 parts by weight of gypsum plaster,
(B) from 0.05 to 50 parts by weight of oxide and/or hydroxide of alkali and/or alkaline earth metals,
(C) from 0.05 to 20 parts by weight of organopolysiloxane which has hydroxyl and/or alkoxy groups bonded to silicon atoms, is liquid at 25°C and has a viscosity of from 0.5 to 3000 mPa·s.

2. Water-repellent plaster compositions according to Claim 1, wherein CaO, MgO, Ca(OH)₂, Mg(OH)₂ and NaOH are used as oxide and/or hydroxide of alkali and/or alkaline earth metals (B).

3. Water-repellent plaster compositions according to Claim 1 or 2, wherein, based on 100 parts by weight of gypsum plaster (A), from 0.1 to 35 parts by weight of oxide and/or hydroxide (B) are used.

4. Water-repellent plaster compositions according to Claim 1 to 3, wherein the organopolysiloxane (C) is made up of units of the general formula (I)
Rₐ(OR')_{b}SiO_{(4-a-b)/2} (I),
where
R are identical or different, unsubstituted or halogen-substituted C₁-C₁₈-hydrocarbon radicals,
R' are identical or different C₁-C₄-alkyl radicals or hydrogen atoms,
a is 0, 1, 2 or 3, on average from 0.1 to 2.5 and
b is 0, 1, 2, 3 or 4, on average from 0.1 to 3.5.

5. Water-repellent plaster compositions according to Claim 1 to 4, wherein, based on 100 parts by weight of gypsum plaster (A), from 0.1 to 8 parts by weight of organopolysiloxanes (C) are used.

6. Process for the water-repellent treatment of plaster, wherein
(A) 100 parts by weight of gypsum plaster are admixed with
(B) from 0.05 to 50 parts by weight of oxide and/or hydroxide of alkali and/or alkaline earth metals, and
(C) from 0.05 to 20 parts by weight of organopolysiloxane which has hydroxyl and/or alkoxy groups bonded to silicon atoms, is liquid at 25°C and has a viscosity of from 0.5 to 3000 mPa·s.

7. Process according to Claim 6, wherein organopolysiloxane (C) is used as emulsion.

## Revendications

1. Compositions de plâtre hydrofuges, contenant les composants suivants :
(a) 100 parties en poids de plâtre;
(b) 0,05 à 50 parties en poids d'oxyde et/ou d'hydroxyde de métaux alcalins et/ou alcalino-terreux, et
(c) 0,05 à 20 parties en poids d'organopolysiloxane, lequel présente des radicaux hydroxyle et/ou alcoxy liés à des atomes de silicium, est liquide à 25°C et possède une viscosité de 0,5 à 3000 mPa.s.

2. Compositions de plâtre hydrofuges suivant la revendication 1, dans lesquelles l'oxyde et/ou l'hydroxyde de métaux alcalins et/ou alcalino-terreux (B) utilisés sont CaO, MgO, Ca(OH)₂, Mg(OH)₂ et NaOH.

3. Compositions de plâtre hydrofuges suivant la revendication 1 ou 2, dans lesquelles on utilise 0,1 à 35 parties en poids d'oxyde et/ou d'hydroxyde (B) par rapport à 100 parties en poids de plâtre (A).

4. Compositions de plâtre hydrofuges suivant les revendications 1 à 3, dans lesquelles l'organopolysiloxane (C) est formé d'unités de formule générale (I)
Rₐ(OR')_{b}SiO_{(4-a-b)/2} (I),
dans laquelle
R désigne des radicaux hydrocarbonés en C₁ à C₁₈ identiques ou différents, le cas échéant substitués avec des atomes d'halogène;
R' désigne des radicaux alcoyle en C₁ à C₄ identiques ou différents ou des radicaux hydrogène;
a possède les valeurs 0, 1, 2 ou 3, en moyenne une valeur de 0,1 à 2,5, et
b possède les valeurs 0, 1, 2, 3 ou 4, en moyenne une valeur de 0,1 à 3,5.

5. Compositions de plâtre hydrofuges suivant les revendications 1 à 4, dans lesquelles on utilise 0,1 à 8 parties en poids d'organopolysiloxanes (C) par rapport à 100 parties en poids de plâtre (A).

6. Procédé pour la finition hydrofuge du plâtre, dans lequel sont mélangées
(A) 100 parties en poids de plâtre;
(B) 0,05 à 50 parties en poids d'oxyde et/ou d'hydroxyde de métaux alcalins et/ou alcalino-terreux, et
(C) 0,05 à 20 parties en poids d'organopolysiloxane, lequel présente des radicaux hydroxyle et/ou alcoxy liés à des atomes de silicium, est liquide à 25°C et possède une viscosité de 0,5 à 3000 mPa.s.

7. Procédé suivant la revendication 6, dans lequel l'organopolysiloxane (C) est utilisé sous forme d'émulsion.
